Europäisches Patentamt

European Patent Office

Office européen des brevets

(19)

(11) Veröffentlichungsnummer : **0 078 074**
**B1**

(12) **EUROPÄISCHE PATENTSCHRIFT**

(45) Veröffentlichungstag der Patentschrift :
05.06.85

(51) Int. Cl.⁴ : **G 01 N 21/74, H 05 B 3/00**

(21) Anmeldenummer : **82201254.8**

(22) Anmeldetag : **11.10.82**

54 **Atomisierungsvorrichtung für die Atomabsorptionsspektroskopie.**

(30) Priorität : **12.10.81 DE 3140458**

(43) Veröffentlichungstag der Anmeldung :
**04.05.83 Patentblatt 83/18**

(45) Bekanntmachung des Hinweises auf die Patenterteilung : **05.06.85 Patentblatt 85/23**

(84) Benannte Vertragsstaaten :
**DE FR GB**

(56) Entgegenhaltungen :
**DE-A- 2 334 416**
**DE-A- 2 702 189**
**DE-A- 3 030 424**

(73) Patentinhaber : **Philips Patentverwaltung GmbH**
**Billstrasse 80**
**D-2000 Hamburg 28 (DE)**
**DE**
**N.V. Philips' Gloeilampenfabrieken**
**Groenewoudseweg 1**
**NL-5621 BA Eindhoven (NL)**
**FR GB**

(72) Erfinder : **Lersmacher, Bernhard, Dr.**
**Schlossweiherstrasse 31**
**D-5100 Aachen (DE)**
Erfinder : **Wassall, Michael Peter**
**32 Greenfields**
**Earth Cambridge (GB)**
Erfinder : **Connor, Philip John, Dr.**
**5 Mereton Walk**
**Hardwick Cambridge (GB)**

(74) Vertreter : **Piegler, Harald, Dipl.-Chem. et al**
**Philips Patentverwaltung GmbH Billstrasse 80 Post-**
**fach 10 51 49**
**D-2000 Hamburg 28 (DE)**

## Beschreibung

Die Erfindung bezieht sich auf eine Atomisierungsvorrichtung zum Erzeugen freier Atome bzw. einer Atomwolke für die Atomabsorptionsspektroskopie durch Erhitzen einer Analysenprobe, mit einer vorzugsweise rohrförmigen Küvette zur Aufnahme der Probe, wobei die Küvette entweder aus einem Grundkörper aus Kohlenstoff besteht, der von einer Pyrographitschicht umhüllt ist, oder ausschließlich aus Pyrographit besteht, und mit einer elektrischen Versorgungseinheit zur Joule'schen Erwärmung der Küvette zwecks Erzeugung der freien Atome der Probe, wobei die Versorgungseinheit und die Küvette über Kontaktstücke miteinander in Berührung stehen, die Küvette und die Kontaktstücke derart ausgebildet sind, daß eine bestimmte vorgesehene Temperaturverteilung in der Küvette erhalten wird, und der Pyrographit parallel zur Küvettenoberfläche geschichtet ist.

Eine vergleichbare Vorrichtung ist aus der DE-A-23 34 416 bekannt. Darin wird die Atomisierungsvorrichtung als « Ofen » und die Küvette als « Ofenelement » bezeichnet. Die Küvette dieser Vorrichtung besteht aus Graphit, aus Pyrographit oder aus Graphit, der mit einer Pyrographitschicht überzogen ist, und ist derart gestaltet, daß in der Küvette, wenn sie von einem elektrischen Strom zwischen an den beiden Enden der Küvette befestigten Kontaktstücken (dort « Elektrodenkörper » genannt) durchflossen wird, eine derartige Temperaturverteilung über die Längsachse der Küvette erhalten wird, daß der Bereich, der die Probe enthält, eine höhere Temperatur als Bereiche in der Nähe der Enden der Küvette erreicht. Diese Temperaturverteilung hat den Nachteil, daß eine hohe Wärmeabstrahlung und damit ein hoher Stromverbrauch auftritt. Aus der DE-B-22 19 594 ist es bekannt, Wärmeabstrahlungsverluste zu vermeiden, indem die der Probe bzw. Atomwolke abgewandten Oberflächen einer Küvette, die weder von einer Pyrographitschicht umhüllt ist noch aus Pyrographit besteht, von einem strahlungsabsorbierenden, eine geringe Wärmeableitung aufweisenden Schutzmantel umgeben werden. Der Schutzmantel besteht entweder aus poröser Kohle oder er stellt ein massives Rohr dar, welches die Küvette im Abstand umgibt und einseitig gehaltert ist. Gemäß der DE-A-22 25 421 erfolgt die Beheizung einer Küvette, die weder von einer Pyrographitschicht umhüllt ist noch aus Pyrographit besteht, durch einen stromdurchflossenen Heizkörper, der die Küvette umgibt und der aus einem porösen oder schaumartigen elektrisch leitenden Material, z. B. aus porösem Graphit oder aus poröser Kohle, besteht. Auch auf diese Weise sollen Wärmeverluste möglichst klein gehalten werden. Derartige als Umhüllungen anzusehende Schutzmäntel und Heizkörper haben den Nachteil, daß der gesamte Aufbau komplexer und damit auch teurer wird. Schutzumhüllungen oder Heizelemente — besonders solche aus porösen Materialien — unterliegen einer verstärkten korrosiven Abnutzung, z. B. durch Oxidation oder durch Reaktion mit der Analysenprobe, und müssen mehr oder weniger häufig ausgewechselt werden. Der Meßvorgang selbst, und dabei insbesondere der Einfüllvorgang der Analysenprobe, wird schwieriger und erfordert zusätzliche apparative Maßnahmen.

Der Erfindung liegt demgegenüber die Aufgabe zugrunde, eine derartige Temperaturverteilung zu erzielen, daß zwar der Bereich, der die Analysenprobe enthält, ebenfalls die höchste Temperatur, gemessen längs der Küvettenachse, erreicht, daß aber zusätzlich eine derartige radiale Temperaturverteilung in der im allgemeinen rotationssymmetrischen Küvette erreicht wird, daß die Küvetteninnenwand eine wesentlich höhere Temperatur aufweist als die Küvettenaußenwand.

Diese Aufgabe wird erfindungsgemäß dadurch gelöst, daß die Kontaktflächen der Küvette einerseits und die Kontaktflächen der Kontaktstücke andererseits derart ausgebildet sind und derart miteinander in Berührung stehen, daß der elektrische Strom beim Betrieb der Atomisierungsvorrichtung vorzugsweise durch die Innenwand bzw. durch die innere Pyrographitschicht der Küvette fließt.

Die Erfindung gibt eine Möglichkeit zur Hand, in der Wand der Küvette einen steilen Temperaturgradienten mit von innen nach außen fallenden Temperaturen zu realisieren. Der Vorteil dieser Maßnahme besteht in einer wesentlich besseren Energiebilanz hinsichtlich der erforderlichen elektrischen Energie und ist darüber hinaus auch von großem Einfluß auf die Geschwindigkeit des Analysenablaufs und damit auf die Qualität der durchgeführten analytischen Bestimmung.

Der wesentliche Gedanke der Erfindung besteht darin, daß bestimmte Teile der Küvette unter optimaler Nutzung der physikalischen Eigenschaften der verwendeten Werkstoffe vorzugsweise die Stromleitung übernehmen, während andere Teile der Küvette gleichzeitig als Wärmeflußbarriere von innen nach außen hin wirken. In diesem Zusammenhang ist als eine Werkstoffkomponente Pyrographit oder pyrolytischer Graphit, eine gutorientierte, stark anisotrope Form des Graphits, von besonderer Bedeutung, da er parallel zu seiner Schichtung sehr gute elektrische und thermische Leitfähigkeitswerte aufweist, während die gleichen Leitfähigkeiten, senkrecht zur Schichtung gemessen, um Größenordnungen geringer sind, nämlich im thermischen Fall um das $10^2$ fache, im elektrischen Fall um das $10^3$ fache. Diese ausgeprägte Anisotropie des Pyrographits ermöglicht eine selektive Energiedissipation bzw. eine selektive Beheizung.

Die Kontaktstücke stehen vorzugsweise mit den Pyrographitschichten an der Innenwand der Küvette in Verbindung.

Im Falle einer Küvette, die aus einem Grundkörper, z. B. aus Graphit, mit einer umhüllenden Schicht aus Pyrographit besteht, wird die wärmedämmende Wirkung der äußeren Pyrographitschicht vorzugsweise dadurch noch erhöht, daß die den Grundkörper der Küvette umhüllende Pyrographitschicht mit Unterbrechungsstellen versehen ist, die vorzugsweise zwischen den Kontaktflächen und der äußeren Pyrographitschicht angeordnet sind. Diese Unterbrechungsstellen behindern den Strom- und Wärmefluß von der Innenseite nach außen. Die Unterbrechungsstellen werden mit mechanischen Bearbeitungsverfahren, z. B. durch Schleifen, Drehen oder Fräsen, zwischen den (späteren) Kontaktflächen und der äußeren Pyrographitschicht angebracht. Die Unterbrechungsstellen weisen z. B. die Form von um den Umfang umlaufenden Spalten, Nuten oder Schlitzen auf.

Der Grundkörper der Küvette besteht z. B. aus Elektrographit, Pyrographit, glasartigem Kohlenstoff, Schaumkohlenstoff, karbonisiertem Hartgewebe oder karbonisiertem Hartpapier. Küvetten mit einem Grundkörper aus karbonisiertem Hartgewebe sind aus der DE-A-27 02 189 bekannt. Karbonisiertes Hartpapier wird durch Karbonisation eines Schichtpreßstoffs auf Basis Phenolharz/Papier hergestellt.

Die Pyrographitschicht wird durch reaktive Abscheidung aus einer kohlenwasserstoffhaltigen Gasphase auf dem Grundkörper angebracht. Die Aufwachsrichtung der Pyrographitschicht liegt dabei senkrecht zur Wandung des Grundkörpers.

Die Kontaktflächen der Küvette sind vorzugsweise derart ausgebildet, daß der elektrische Strom bei Betrieb der Vorrichtung senkrecht zur Aufwachsrichtung durch die innere Pyrographitschicht läuft.

Nach einer anderen bevorzugten Ausführungsform der Erfindung sind die Kontaktflächen der Küvette derart ausgebildet, daß der elektrische Strom bei Betrieb der Vorrichtung durch den Grundkörper fließt.

Die erfindungsgemäße elektrische Kontaktierung, die beispielsweise durch Anschleifen bzw. Facettieren von Küvette und Kontaktstücken geschaffen wird, sowie das Anbringen von als Strom- bzw. Wärmeflußbarrieren wirksamen Spalten, Nuten oder Schlitzen haben den Vorteil, daß der Hauptstromfluß durch die inneren Wandbereiche der Küvette erfolgt, wodurch das Innere der Küvette entsprechend stark aufgeheizt wird. Außerdem wird der Wärmefluß in radialer Richtung, also durch die Wand nach außen hin, stark behindert.

Einige Ausführungsbeispiele der Erfindung sind in der Zeichnung dargestellt.

Es zeigen

Figur 1 eine Atomisierungsvorrichtung für die Atomabsorptionsspektroskopie in schematischer Darstellung,

Figur 2a bis Figur 2c Längsschnitte einiger typischer Küvetten,

Figur 3a und Figur 3b einige Beispiele für die Formgebung der Kontaktflächen der Küvetten,

Figur 4 ein Prinzipbild der Kontaktierung zwischen Küvette und Kontaktstücken und

Figur 4a bis Figur 4f einzelne Ausgestaltungen der Kontaktierung nach Fig. 4.

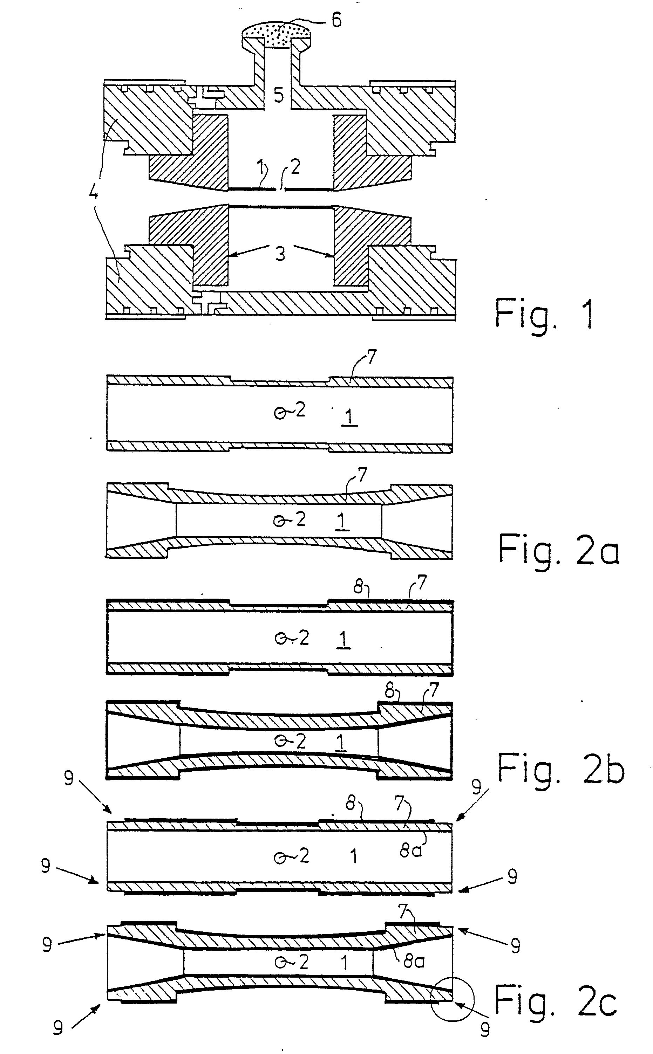

In der Vorrichtung nach Fig. 1 ist eine Küvette 1, die eine Öffnung 2 zur Injektion einer zu analysierenden Probenlösung (einige µl) aufweist, zwischen zwei Kontaktstücken 3 angeordnet. Die Kontaktstücke 3 sind in eine elektrische Versorgungseinheit 4 eingebaut. Oberhalb der Küvette 1 befindet sich eine Öffnung 5, durch die eine Probe an die Küvette herangebracht werden kann, und die mit einem Stopfen 6 verschließbar ist.

In den Fig. 2a bis 2c sind je zwei rohrförmige Küvetten 1 mit je einem Grundkörper 7 und je einer Öffnung 2 im Längsschnitt dargestellt. Fig. 2a zeigt Küvetten aus Graphit ohne Pyrographitschicht.

Fig. 2b zeigt Küvetten mit je einer vollständig umhüllenden Pyrographitschicht 8.

Gemäß Fig. 2c ist die Pyrographitschicht 8 an denjenigen Stellen, auf die die Pfeile 9 hinweisen, mit Unterbrechungen, d. h. mit Strom- und Wärmeflußbarrieren versehen — mit anderen Worten : Die innere Pyrographitschicht 8a ist von der übrigen Pyrographitschicht 8 abgetrennt.

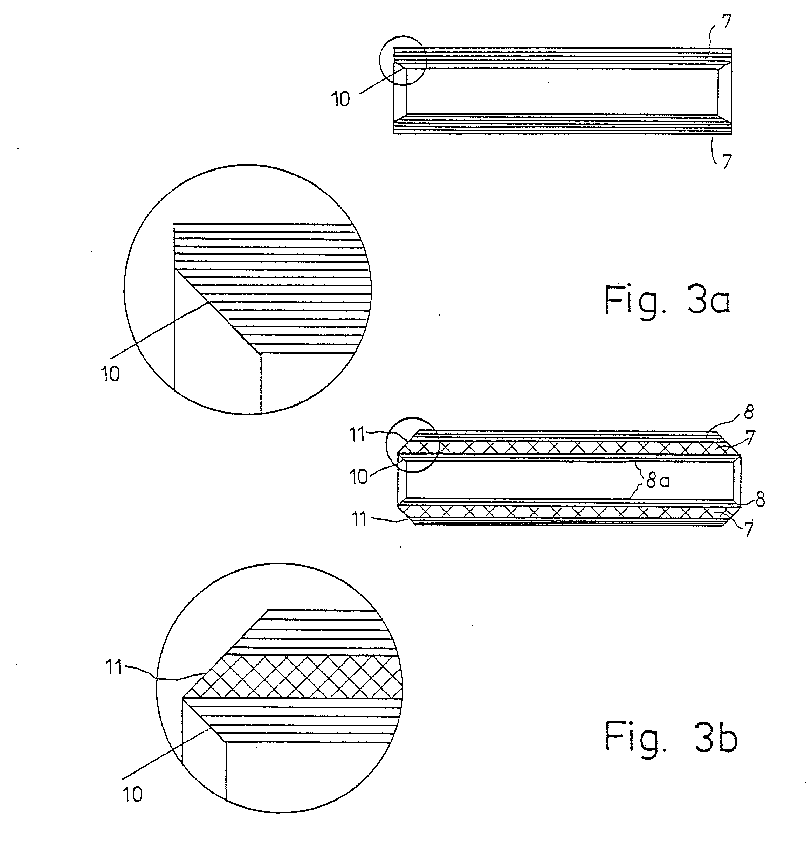

Fig. 3a zeigt ein Beispiel für die Formgebung der Kontaktflächen 10 einer ausschließlich aus Pyrographit bestehenden Küvette ; bei dieser Küvette bestehen also Grundkörper 7 und Beschichtung aus ein und demselben Werkstoff. Fig. 3b zeigt eine aus Graphit 7 mit einer Pyrographitschicht 8 bestehende Küvette.

In den Fig. 3a und 3b weisen die Küvetten Kontaktflächen 10 für die Einleitung des elektrischen Stroms auf.

Die Kontaktflächen 10 sind durch mechanische Bearbeitung, z. B. durch Anschleifen, hergestellt, wobei die Schlifffläche vorzugsweise derart gewählt wird, daß der elektrische Strom bei Betrieb der Vorrichtung senkrecht zur Wachstumsrichtung durch die innere Pyrographitschicht 8a läuft.

Fig. 3b zeigt außerdem eine Unterbrechungsstelle 11 der Pyrographitschicht 8, durch die der Grundkörper 7 freigelegt und die Schicht 8 von der inneren Pyrographitschicht 8a getrennt ist. An dieser durch Anschleifen hergestellten Stelle sind Strom- und Wärmefluß behindert.

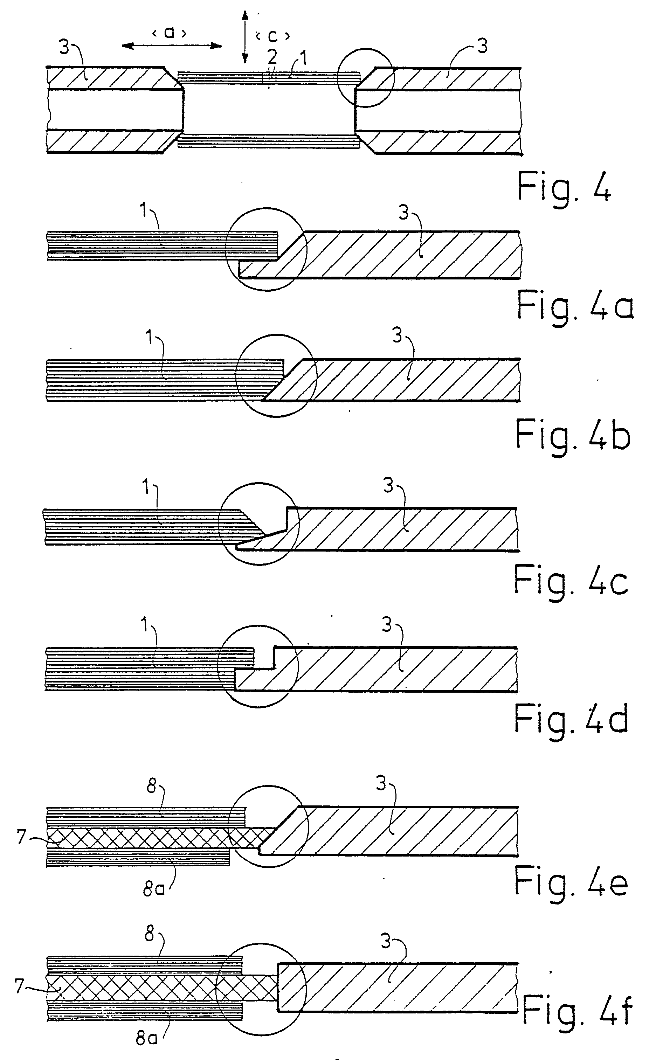

In Fig. 4 ist eine Kontaktierung einer Küvette 1 aus Pyrographit mit Öffnung 2 mit zwei Kontaktstücken 3 dargestellt. Die Richtung der guten thermischen und elektrischen Leitfähigkeit des Pyrographits ist mit einem Pfeil < a > angedeutet, die der schlechten Leitfähigkeit mit einem Pfeil < c >.

Die Fig. 4a bis 4f zeigen schematisch verschiedene Anschliformen der zu kontaktierenden Enden (d. h. der Kontaktflächen) von rohrförmigen Küvetten, die entweder nur aus Pyrographit bestehen (Fig. 4a bis 4d) oder aus Grundkörpern 7 mit Pyrographitschichten 8 und 8a (Fig. 4e und 4f).

Fig. 4a zeigt eine Kontaktierung, bei der das Ende der Küvette 1 durch Innenkontakt mit dem Kontaktstück 3 verbunden ist, und zwar entweder durch einen Paßsitz, der über den gesamten Innenumfang geht, oder durch Spreizkontakte, die den Innenumfang der Küvette nur an einigen Punkten oder Stellen berühren.

Fig. 4b zeigt eine Kontaktierung, bei der das Ende der Küvette 1 unter einem Winkel (z. B. von 30°, gemessen zur Längsachse) angeschliffen ist und das Kontaktstück 3 unter Anpreßdruck an der Küvette 1 anliegt.

Diese Ausführungsform hat gegenüber derjenigen nach Fig. 4a den Vorteil, daß der Meßstrahl nicht durch Rohrverengungen beeinträchtigt wird.

In Fig. 4c ist eine Art des Anschliffes dargestellt (Anschliffwinkel etwa 5 bis 30°), durch die ein geringerer Wärmekontakt und eine homogenere Temperaturverteilung längs der Längsachse der Küvette bewirkt wird.

Fig. 4d zeigt einen stufenförmigen Anschliff, der wie der nach Fig. 4b keine Beeinträchtigung des Meßstrahls mit sich bringt.

Die Fig. 4e und 4f zeigen Ausführungsformen mit einer Kontaktierung nur am Grundkörper 7, der aus Elektrographit oder glasartigem Kohlenstoff besteht. Die Außenbeschichtung 8 aus Pyrographit dient nur zur Wärmedämmung. Auf die Innenbeschichtung 8a kann gegebenenfalls verzichtet werden.

Die Kontaktstücke 3 weisen z. B. die Form von Hohlkörpern oder von porösen Körpern auf. Geeignete Materialien zur Herstellung der Kontaktstücke sind z. B. Elektrographit, glasartiger Kohlenstoff, poröser glasartiger Kohlenstoff und Metalle, z. B. Kupfer. Die Kontaktstücke sind gegebenenfalls mit Kühleinrichtungen versehen bzw. verbunden.

An Küvetten, die nur aus Pyrographit mit einer Wandstärke von etwa 800 μm bestanden, mit Kontaktierungen gemäß Fig. 4a bzw. 4b wurden Temperaturmessungen durchgeführt, die ergaben, daß der Temperaturunterschied zwischen Innen- und Außenwand bereits bei niedrigen Temperaturen von etwa 600 °C meßbar ist, bei 1 000 °C etwa·40° beträgt und bei 1 200 °C an der Außenwand bereits größer als 100° ist.

Diese Werte wurden im stationären Zustand, d. h. nach Erreichen des Temperaturgleichgewichts, gemessen, sie sind also bei der instationären Verfahrensweise der Atomabsorptionsspektroskopie erheblich größer. Messungen bestätigen denn auch, daß bei den hohen Arbeitstemperaturen bis 3 000 °C im realen Analysenzyklus Temperaturdifferenzen zwischen Innen- und Außenseite der Küvette von mehr als 1 000° auftreten.

**Patentansprüche**

1. Atomisierungsvorrichtung zum Erzeugen freier Atome bzw. einer Atomwolke für die Atomabsorptionsspektroskopie durch Erhitzen einer Analysenprobe, mit einer vorzugsweise rohrförmigen Küvette (1) zur Aufnahme der Probe, wobei die Küvette entweder aus einem Grundkörper (7) aus Kohlenstoff besteht, der von einer Pyrographitschicht (8, 8a) umhüllt ist, oder ausschließlich aus Pyrographit besteht, und mit einer elektrischen Versorgungseinheit (4) zur Joule'schen Erwärmung der Küvette zwecks Erzeugung der freien Atome der Probe, wobei die Versorgungseinheit (4) und die Küvette (1) über Kontaktstücke (3) miteinander in Berührung stehen, die Küvette und die Kontaktstücke derart ausgebildet sind, daß eine bestimmte vorgesehene Temperaturverteilung in der Küvette erhalten wird, und der Pyrographit parallel zur Küvettenoberfläche geschichtet ist, dadurch gekennzeichnet, daß die Kontaktflächen (10) der Küvette (1) einerseits und die Kontaktflächen der Kontaktstücke (3) andererseits derart ausgebildet sind und derart miteinander in Berührung stehen, daß der elektrische Strom beim Betrieb der Atomisierungsvorrichtung vorzugsweise durch die Innenwand bzw. durch die innere Pyrographitschicht (8a) der Küvette (1) fließt.

2. Atomisierungsvorrichtung nach Anspruch 1, dadurch gekennzeichnet, daß die Kontaktstücke (3) mit den Pyrographitschichten (8a) an der Innenwand der Küvette (1) in Verbindung stehen.

3. Atomisierungsvorrichtung nach Anspruch 1 oder 2, dadurch gekennzeichnet, daß die den Grundkörper (7) der Küvette (1) allseitig umhüllende Pyrographitschicht (8) mit Unterbrechungsstellen (11) versehen ist.

4. Atomisierungsvorrichtung nach Anspruch 3, dadurch gekennzeichnet, daß die Unterbrechungsstellen (11) zwischen den Kontaktflächen (10) und der äußeren Pyrographitschicht (8) angeordnet sind.

5. Atomisierungsvorrichtung nach Anspruch 1, dadurch gekennzeichnet, daß die Kontaktflächen (10) der Küvette (1) derart ausgebildet sind, daß der elektrische Strom bei Betrieb der Vorrichtung senkrecht zur Aufwachsrichtung durch die innere Pyrographitschicht (8a) läuft.

6. Atomisierungsvorrichtung nach Anspruch 1, dadurch gekennzeichnet, daß die Kontaktflächen (10) der Küvette (1) derart ausgebildet sind, daß der elektrische Strom bei Betrieb der Vorrichtung durch den Grundkörper (7) fließt.

7. Atomisierungsvorrichtung nach Anspruch 1 oder 6, dadurch gekennzeichnet, daß der Grundkörper (7) aus karbonisiertem Hartpapier besteht.

**Claims**

1. An atomizer for producing free atoms and an atomic cloud for atomic absorption spectroscopy, by heating an analysis sample, said atomizer having a preferably tubular cuvette (1) for receiving the sample, in which the cuvette consists either of a basic member (7) of carbon which is enveloped by a layer of pyrolytic graphite (8, 8a), or consists exclusively of pyrolytic graphite, and having an electrical supply unit (4) for Ohmic heating the cuvette for producing the free atoms of the sample, the supply unit (4) and the cuvette (1) being in contact with each other

*via* contact members (3), the cuvette and the contact members being constructed so that a given predetermined temperature distribution in the cuvette is obtained and the pyrolytic graphite is deposited parallel to the cuvette surface, characterized in that the contact surfaces (10) of the cuvette (1) on the one hand and the contact surfaces of the contact members (3) on the other hand are so constructed and contact each other in such manner that during operation of the atomizer the electric current preferably flows through the inner wall and through the inner pyrolytic graphite layer (8a) of the cuvette (1).

2. An atomizer as claimed in Claim 1, characterized in that the contact members (3) are connected to the pyrolytic graphite layers (8a) on the inner wall of the cuvette (1).

3. An atomizer as claimed in Claim 1 or 2, characterized in that the pyrolytic graphite layer (8) enveloping the basic member (7) of the cuvette (1) on all sides comprises interruptions (11).

4. An atomizer as claimed in Claim 3, characterized in that the interruptions (11) are provided between the contact surfaces (10) and the outer pyrolytic graphite layer (8).

5. An atomizer as claimed in Claim 1, characterized in that the contact surfaces (10) of the cuvette (1) are constructed so that during operation of the device the electric current flows through the inner pyrolytic graphite layer (8a) at right angles to the direction of growth.

6. An atomizer as claimed in Claim 1, characterized in that the contact surfaces (10) of the cuvette (1) are constructed so that during operation of the device the electric current flows through the basic member (7).

7. An atomizer as claimed in Claim 1 or 6, characterized in that the basic member (7) consists of carbonized hardpaper.

**Revendications**

1. Chambre d'atomisation pour l'obtention d'atomes libres respectivement d'une nuée d'atomes pour la spectroscopie par absorption atomique par chauffage d'un échantillon à analyser, à l'aide d'une cuvette, de préférence tubulaire (1), pour la réception de l'échantillon, la cuvette étant constituée soit par un corps de base en carbone (7) enveloppé d'une couche de pyrographite (8, 8a), soit uniquement par du pyrographite et à l'aide d'une unité d'alimentation électrique (4) pour le chauffage ohmique de la cuvette pour obtenir des atomes libres de l'échantillon, l'unité d'alimentation (4) et la cuvette étant en contact, l'une avec l'autre, par l'intermédiaire de pièces de contact (3), la cuvette et les pièces de contact étant formées de façon à maintenir une répartition de température prescrite déterminée dans la cuvette, le pyrographite étant stratifié parallèlement à la surface de la cuvette, caractérisée en ce que les faces de contact (10) de la cuvette d'un côté et les faces de contact des pièces de contact (3) de l'autre côté sont formées et en contact, les unes avec les autres, de façon que, lors du fonctionnement de la chambre d'atomisation, le courant électrique traverse de préférence la paroi intérieure respectivement la couche en pyrographite (8a) intérieure de la cuvette (1).

2. Chambre d'atomisation selon la revendication 1, caractérisée en ce que les pièces de contact 3 sont en contact avec les couches en pyrographite (8a) prévues sur la paroi intérieure de la cuvette (1).

3. Chambre d'atomisation selon la revendication 1 ou 2, caractérisée en ce que la couche en pyrographite (8) enveloppant le corps de base (7) de la cuvette 1 est munie d'endroits d'interruption (11).

4. Chambre d'atomisation selon la revendication 3, caractérisée en ce que les endroits d'interruption (11) sont appliqués entre les faces de contact (10) et la couche de pyrographite extérieure (8).

5. Chambre d'atomisation selon la revendication 1, caractérisée en ce que les faces de contact (10) de la cuvette (1) sont formées de façon que, lors du fonctionnement de la chambre, le courant électrique traverse la couche de pyrographite intérieure (8a) perpendiculairement à la direction de croissance.

6. Chambre d'atomisation selon la revendication (1), caractérisée en ce que les faces de contact (10) de la cuvette (1) sont formées de façon que, lors du fonctionnement de la chambre, le courant électrique traverse le corps de base (7).

7. Chambre d'atomisation selon la revendication 1 ou 6, caractérisée en ce que le corps de base (7) est constitué par du papier dur carbonisé.

Fig. 1

Fig. 2a

Fig. 2b

Fig. 2c

Fig. 3a

Fig. 3b

Fig. 4

Fig. 4a

Fig. 4b

Fig. 4c

Fig. 4d

Fig. 4e

Fig. 4f